# EUROPÄISCHE PATENTSCHRIFT

(11) **EP 1 371 875 B1**
(45) Veröffentlichungstag und Bekanntmachung des Hinweises auf die Patenterteilung: **29.03.2006**
(21) Anmeldenummer: 02013204.9
(22) Anmeldetag: 15.06.2002
(51) Int. Cl.: F16F 15/139, F16D 25/0635

(54) **Vorrichtung zur Dämpfung von Drehschwingungen**
Device to damp rotational vibrations
Dispositif pour amortir des vibrations en rotation

(43) Veröffentlichungstag der Anmeldung: 17.12.2003
(73) Patentinhaber: BorgWarner Inc., Auburn Hills MI 48326 (US)
(72) Erfinder: Bauer, Karl-Heinz, 76676 Graben-Neudorf (DE); Schäfer, Michael, 68723 Schwetzingen (DE); Hauck, Hans-Jürgen, 76137 Karlsruhe (DE); Heinrich, Johannes, Dr., 61381 Friedrichsdorf (DE)
(74) Vertreter: Patentanwälte Westphal, Mussgnug & Partner

(56) Entgegenhaltungen:
- EP-A- 0 555 643
- DE-A- 3 118 565
- DE-A- 3 801 348
- DE-A- 10 037 646
- GB-A- 2 251 041
- US-A- 3 804 219

## Beschreibung

Die Erfindung betrifft eine Vorrichtung zur Dämpfung von Drehschwingungen, insbesondere einen Torsionsschwingungsdämpfer, gemäß dem Oberbegriff des Anspruchs 1.

Derartige Vorrichtungen zur Dämpfung von Drehschwingungen, von denen die Erfindung ausgeht, sind aus dem Stand der Technik in einer Vielzahl von Abwandlungen bekannt. Stellvertretend sei dazu auf die Druckschrift "Borg-Warner Automotive: Torsionsschwingungsdämpfer, 0691W, 1991" verwiesen. Der Ausdruck "Vorrichtung zur Dämpfung von Drehschwingungen" ist hierbei im weitesten Sinne zu verstehen. Ganz allgemein handelt es sich hierbei um eine Art elastische Kupplung, die zwischen zwei Bauteilen in einem Antriebsstrang angeordnet ist, wie z.B. zwischen einer Verbrennungskraftmaschine und einem Getriebe. Derartige Vorrichtungen verhindern, dass Schwingungen von der Verbrennungskraftmaschine auf den übrigen Antriebsstrang übertragen werden.

Die einfachste Ausführung einer derartigen Vorrichtung zur Dämpfung von Drehschwingungen umfasst ein Primärelement und ein Sekundärelement, welche mittels einer Federeinrichtung miteinander koppelbar sind und welche um eine Drehachse begrenzt gegeneinander verdrehbar sind. Die Federeinrichtung umfasst dazu vorzugsweise eine Mehrzahl von Federn, die auf einem zur Drehachse koaxialen Kreis in Umfangsrichtung, vorzugsweise in einem bestimmten konstanten Abstand zueinander, angeordnet sind. Die Federn oder ggf. eine Hintereinanderanordnung mehrerer Federn sind nunmehr einendseitig mit dem Primärelement und andernendseitig mit dem Sekundärelement verbunden.

Aufgrund der Federkopplung erfolgt eine Drehmomentenübertragung, wobei durch die Federcharakteristik zusätzlich in bestimmtem Maße eine Dämpfungswirkung erzielt wird. Beim Einsatz derartiger Vorrichtungen in Antriebssträngen für Fahrzeuge hat sich jedoch gezeigt, dass eine Bereitstellung eines hohen Reibmomentes im Antriebsstrang zur Verringerung der Schwingungsamplituden im Resonanzbereich notwendig ist. Die Folge davon ist jedoch eine Verschlechterung der Übertragungscharakteristik im Bereich höherer Drehzahlen.

Zur Lösung des geschilderten Problems sieht die DE 100 37 646 A1 vor, Primär- und Sekundärelement nicht nur mittels obiger Federeinrichtung miteinander zu koppeln sondern darüber hinaus eine Kopplung zwischen Primärelement und Sekundärelement über eine Reibeinrichtung herzustellen, deren Dämpfungswirkung mit Hilfe einer eigens dafür vorgesehenen Krafterzeugungseinrichtung Steuer- bzw. regelbar ist, und welche darüber hinaus in der Art einer Kupplung zu- bzw. abschaltbar ist.

Obwohl sich die in der DE 100 37 646 A1 beschriebene Ausführung eines Torsionsschwingungsdämpfers dem Grunde nach bewährt hat, ist für bestimmte Anwendungsgebiete die in dieser Druckschrift beschriebene Regeleinrichtung zur Bewerkstelligung eines kontrollierten Reibmomentes der Reibeinrichtung zu aufwendig und damit mit zu hohen Herstellungskosten für die gesamte Anordnung verbunden.

Der Erfindung liegt nunmehr die Aufgabe zugrunde, eine bekannte Vorrichtung zur Dämpfung von Drehschwingungen derart auszugestalten und weiterzubilden, dass die vorstehend genannten Nachteile nicht mehr auftreten. Insbesondere soll eine kostengünstige Herstellung einer Regelung der Dämpfungswirkung der Reibeinrichtung gewährleistet werden.

Diese Aufgabe wird durch eine Vorrichtung zur Dämpfung von Drehschwingungen mit den Merkmalen des kennzeichnenden Teils des Anspruchs 1 erfindungsgemäß gelöst.

Vorteilhafte Ausführungen und Weiterbildungen der Erfindung sind in den Unteransprüchen angegeben.

Die Erfindung geht von einer Vorrichtung zur Dämpfung von Drehschwingungen aus, welche wenigstens ein Primärelement und ein Sekundärelement der vorgenannten Art umfasst. Wie vorgehend bereits beschrieben wurde, sind Primärelement und Sekundärelement mittels einer Federeinrichtung miteinander koppelbar und um eine Drehachse begrenzt gegeneinander verdrehbar. Fernerhin ist vorgesehen, dass Primärelement und Sekundärelement mit Hilfe einer Reibeinrichtung miteinander in Reibverbindung verbringbar sind. Hierzu weist die Reibeinrichtung wenigstens zwei aneinander reibbar ausgebildete Elemente auf. Die miteinander in Reibkontakt tretenden Flächen können dabei auch einen speziellen Reibbelag tragen oder die Oberflächen dieser Elemente können in besonderer Weise strukturiert ausgebildet sein.

Die Variabilität der Dämpfungswirkung der Reibverbindung wird dadurch bewerkstelligt, dass die wenigstens zwei aneinander reibbar ausgebildeten Elemente mit einer den Reibschluss hervorrufenden Anpresskraft beaufschlagbar sind, welche von einer Krafterzeugungseinrichtung erzeugt wird.

Der wesentliche Gedanke der Erfindung besteht nun darin, die vergleichsweise komplizierte Regeleinrichtung gemäß der DE 100 37 646 A1 zur Kontrolle und Veränderung des Reibschlusses der wenigstens zwei aneinander reibenden Elemente durch eine einfachere Anordnung zu ersetzen. Konkret ist dies dadurch realisiert, dass die Krafterzeugungseinrichtung eine mechanische Betätigungseinrichtung zur Erzeugung einer vorzugsweise konstanten Betätigungskraft aufweist und dass ferner eine hydraulische Betätigungseinrichtung vorgesehen ist, welche geeignet ist, zu dieser vorgenannten Betätigungskraft eine Gegenkraft zu erzeugen, so dass sich die Anpresskraft unter Vernachlässigung etwaiger sonstiger auftretender Kräfte aus der Vektorsumme der vorzugsweise konstanten Betätigungskraft und der Gegenkraft ergibt. Durch diese Maßnahme wird erreicht, dass sich die Regelung der Dämpfungswirkung der Reibeinrichtung einfach bewerkstelligen lässt, nämlich vorzugsweise durch Veränderung der Druckmittelbeaufschlagung der hydraulischen Betätigungseinrichtung.

Eine besonders vorteilhafte Variante der Erfindung besteht darin, dass die mechanische Betätigungseinrichtung derart ausgebildet ist, dass im Ruhezustand eine konstante Anpresskraft auf die Elemente ausgeübt wird, und dass die hydraulische Betätigungseinrichtung so ausgebildet ist, dass die Anpresskraft und damit die Reibkraft über ein hydraulisches Ausrücken der Elemente reduziert wird. Prinzipiell ist es jedoch genauso möglich, die Elemente mit Hilfe der mechanischen Betätigungseinrichtung in ausgerücktem Zustand zu halten und den Anpressdruck und damit die Reibkraft mit Hilfe der hydraulischen Betätigungseinrichtung gezielt zu erhöhen.

Eine besonders vorteilhafte Ausgestaltung dieser Variante der Erfindung besteht darin, dass die mechanische Bestätigungseinrichtung wenigstens ein Federelement umfasst. Die Ausführungsvariante mit Hilfe eines einfachen Federelements, vorzugsweise einer Schrauben- bzw. Druckfeder oder einer Tellerfeder, bietet sich aufgrund hierdurch möglicher kleiner Baumaße an.

In weiterer Ausgestaltung dieser Variante sieht die Erfindung vor, einen ohnehin in einem Getriebe oder dergleichen vorhandenen Flüssigkeitsdruck zur Regelung der von der hydraulischen Betätigungseinrichtung erzeugten Gegenkraft zu verwenden. Aus diesem Grund ist erfindungsgemäß vorgesehen, etwaig vorhandene nasslaufende Kupplungs- und/oder Getriebeanordnungen in die Vorrichtung zur Dämpfung von Drehschwingungen zu integrieren. Es ist vorgesehen, dass eine oder mehrere vorzugsweise mit einer Kühl- und/oder Druckflüssigkeit oder ähnlichem betriebene Kupplungs- und/oder Getriebeanordnungen als Druckmittelspender zur Betätigung der hydraulischen Betätigungseinrichtung agieren.

Konkret ist dies dadurch realisiert, dass die hydraulische Betätigungseinrichtung eine Druckmittelversorgungseinrichtung zum Versorgen der hydraulischen Betätigungseinrichtung mit Druckmittel umfasst, mit dessen Hilfe die oben angegebene Gegenkraft zum Erhöhen bzw. Erniedrigen der Anpresskraft erzeugt wird. Die Druckmittelversorgungseinrichtung ist derart mit der Kupplungs- und/oder Getriebeanordnung verbunden, dass die sich innerhalb der Kupplungs- und/oder Getriebeanordnung befindliche Kühl- und/oder Druckflüssigkeit durch diese Druckmittelversorgungseinrichtung die hydraulische Betätigungseinrichtung mit Kühl- und/oder Druckflüssigkeit als Druckmittel versorgt.

Als besonders vorteilhafte Ausführungsvariante sei angenommen, dass die Kupplungs- und/oder Getriebeanordnung eine Lamellenkupplung ist. Eine derartige Lamellenkupplung, wie sie beispielsweise in der DE 31 18 565 A1 oder in der DE 35 32 759 C1 beschrieben ist, ist mit Hilfe eines Betätigungskolbens hydraulisch betätigbar.

Erfindungsgemäß ist nunmehr vorgesehen, genau diesen über den Betätigungskolben auf das Lamellenpaket wirkenden hydraulischen Druck zur Steuerung der Anpresskraft der Reibeinrichtung zu verwenden.

Eine besonders vorteilhafte Variante der Erfindung sieht vor, dass die Druckmittelversorgungseinrichtung Bestandteil der nasslaufenden Kupplungs- und/oder Getriebeanordnung ist. Hierbei kann es sich sowohl um rotierende Bauelemente als auch um ortsfeste handeln. Der Vorteil besteht folglich darin, dass keine zusätzlichen Druckmittelvorversorgungseinrichtungen vorgesehen werden müssen.

Um eine besonders günstige Dämpfungscharakteristik zu erhalten, ist erfindungsgemäß vorgesehen, dass die Lamellenkupplung eine Kupplung ist, welche bei fehlendem hydraulischem Betätigungsdruck geöffnet ist (sogenannte "normally open"-Kupplung) und die Reibeinrichtung eine zu dieser Lamellenkupplung in Reihe geschaltete "normally closed"-Reibeinrichtung ist, welche geschlossen ist, wenn kein hydraulischer Betätigungsdruck anliegt, und die Ansteuerung der hydraulischen Betätigungseinrichtung der Kupplung und der hydraulischen Betätigungseinrichtung der Reibeinrichtung mit ein und -demselben Druckmitteldruck erfolgt. Eine Alternativvariante mit ähnlich günstiger Dämpfungscharakteristik ergibt sich dadurch, dass die Lamellenkupplung eine "normally closed"-'Kupplung und die Reibeinrichtung eine zu dieser "normally closed"-Kupplung serienverschaltete "normally open"-Reibeinrichtung ist.

Eine Ausgestaltung dieser Variante, welche besonders wenig Bauraum erfordert, besteht erfindungsgemäß darin, dass der hydraulische Betätigungskolben der Lamellenkupplung und die hydraulische Betätigungseinrichtung der Reibeinrichtung im wesentlichen einen gemeinsamen Druckraum einschliessen.

Eine weitere Reduktion des Platz- und Bauteilbedarfs läßt sich erfindungsgemäß dadurch erzielen, dass der hydraulische Betätigungskolben der Lamellenkupplung Bestandteil der hydraulischen Betätigungseinrichtung der Reibeinrichtung oder die hydraulische Betätigungseinrichtung der Reibeinrichtung Bestandteil des hydraulischen Betätigungskolbens der Lamellenkupplung ist.

Eine besonders einfache Variante einer Vorrichtung der vorgenannten Art besteht darin, dass zumindestens eines der Elemente gegenüber zumindestens einem der benachbarten Elemente im wesentlichen senkrecht zu den jeweiligen Reibflächen verschiebbar ausgebildet ist. Bei einem bezüglich der Drehachse im wesentlichen rotationssymmetrischen System wird die Verschiebbarkeit vorzugsweise in radialer oder in axialer Richtung gewählt, um konstruktiv einfache Anordnungen zu erhalten.

Eine besonders vorteilhafte Variante der Erfindung besteht darin, dass wenigstens ein Federelement das gegenüber dem benachbarten Element verschiebbare Element gegenüber dem vorzugsweise ortsfesten benachbarten Element eingerückt hält.

In besonderer Ausgestaltung dieser Variante ist erfindungsgemäß vorgesehen, dass die hydraulische Betätigungseinrichtung ein mit Hilfe eines angrenzenden Druckmittelraumes mit Druckmittel beaufschlagbares Kolbenelement aufweist, welches mit Druckmittel beaufschlagt, das wenigstens eine gegenüber den benachbarten reibflächentragenden Element verschiebbare reibflächentragende Element von dem benachbarten reibflächentragenden Element ausgerückt hält. Diese Variante kommt mit einer geringen Anzahl an Einzelbauteilen aus.

Eine Alternativvariante zur vorgenannten Ausführungsform besteht darin, dass zwischen dem wenigstens einen gegenüber dem benachbarten Element verschiebbaren Element und dem benachbarten vorzugsweise ortsfesten Element ein Druckmittelraum gebildet ist, welcher Bestandteil der hydraulischen Betätigungseinrichtung ist, wobei der Druckmittelraum druckmittel- beaufschlagbar ist, so dass wenigstens ein gegenüber dem benachbarten Element verschiebbares Element von dem benachbarten Element ausrückend haltbar ist. Diese Variante kommt mit einer gegenüber der vorgenannten Variante weiter reduzierten Anzahl an Bauelementen aus. Bei dieser Variante wird sich zunutze gemacht, dass die Reibflächen der in eingerücktem Zustand aneinander reibenden Elemente selbst als Dichtflächen wirken, indem sie den Druckmittelraum mit wenigstens einer Außenfläche der Reibfläche begrenzen.

Eine Druckbeaufschlagung des Druckmittels im Druckmittelraum bewirkt hierbei jedoch nicht lediglich ein Trennen der benachbarten Elemente sondern darüber hinaus ein Öffnen des Druckmittelraumes zur Umgebung. Zur Begrenzung eines damit verbundenen Druckmittelverlusts ist erfindungsgemäß eine Drosseleinrichtung vorgesehen, welche den Druckmittelfluss insbesondere im ausgerückten Zustand benachbarter Elemente unterbindet oder zumindest begrenzt.

In einer weiteren Ausführungsvariante ist eine Dichteinrichtung zum Abdichten des Druckmittelraumes vorgesehen.

Drei Ausführungsbeispiele der Erfindung sind in der Zeichnung dargestellt und werden im folgenden näher beschrieben. Es zeigen:
- Figur 1:: Ein erstes Ausführungsbeispiel eines erfindungsgemäßen Systems zur Dämpfung von Drehschwingungen im Axialschnitt
- Figur 2:: Einen Ausschnitt des erfindungsgemäßen Systems nach Figur 1
-Draufsicht auf die Federeinrichtung aus der Ebene A von rechts-
- Figur 3:: Besondere Ausführungsvarianten des erfindungsgemäßen Systems nach Figur 1 im Bereich des Ausschnitts X
a) das mittlere Element trägt beidseitig einen Reibbelag
b) das linke und das rechte Element tragen jeweils einen Reibbelag
c) das linke und das mittlere Element tragen einen Reibbelag
- Figur 4:: Das drehzahlabhängige Dämpfungsverhalten des ersten Ausführungsbeispiels eines erfindungsgemäßen Systems zur Dämpfung von Drehschwingungen nach. Figur 1
a)normierte Schwingungsamplitude in Abhängigkeit von der normierten Drehzahl
b)normierte Betätigungskräfte auf die erfindungsgemäße Reibeinrichtung in Abhängigkeit von der normierten Drehzahl
- Figur 5:: Ein zweites Ausführungsbeispiel eines erfindungsgemäßen Systems zur Dämpfung von Drehschwingungen im Axialschnitt
- Figur 6:: Ein drittes Ausführungsbeispiel eines erfindungsgemäßen Systems zur Dämpfung von Drehschwingungen im Axialschnitt

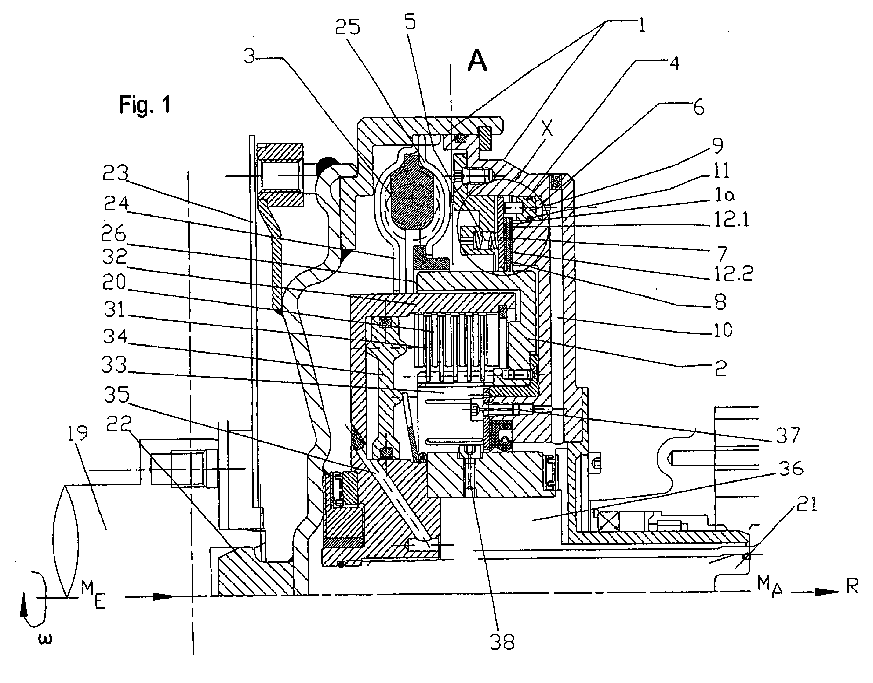

Die Figur 1 verdeutlicht an Hand eines Ausschnittes aus einem beispielhaft gewählten Antriebsstrang für ein Kraftfahrzeug einen möglichen Grundaufbau und die Funktionsweise einer erfindungsgemäß gestalteten Vorrichtung zur Dämpfung von Drehschwingungen.

Auf der linken Seite der Zeichnungsfigur ist ein Flansch 19 angedeutet, welcher beispielsweise mit einer Verbrennungskraftmaschine, einem Motor oder dergleichen gekoppelt ist. Diese Seite stellt die Antriebsseite des Antriebsstrangs dar.

Auf der rechten Seite des Zeichnungsblattes ist eine Welle 21 skizziert, welche beispielsweise mit einem hier nicht dargestellten Getriebe oder dergleichen gekoppelt ist. Diese Seite stellt die Abtriebsseite des Antriebsstrangs dar.

Zwischen diesen beiden Enden, Flansch 19 und Welle 21, ist die erfindungsgemäße Vorrichtung zur Dämpfung von Drehschwingungen angeordnet. Ein mit der Drehzahl ω antriebsseitig über den Flansch 19 eingeleitetes antriebsseitiges Drehmoment M_{E} ist folglich über die erfindungsgemäße Vorrichtung zur Dämpfung von Drehschwingungen auf die Welle 21 und damit die Abtriebsseite übertragbar. Das entsprechende Abtriebsseitige Drehmoment ist in der Zeichnungsfigur durch das Bezugszeichen M_{A} gekennzeichnet.

Hauptbestandteile des erfindungsgemäßen Systems zur Dämpfung von Drehschwingungen sind im vorliegenden Fall:
1. ein glockenförmiges Primärelement 1, welches beispielhaft über einen Zwischenflansch 23 mit dem antriebsseitigen Flansch 19 im Wesentlichen drehfest verbunden ist, wobei ein Zentrierzapfen 22 das Primärelement 1 gegenüber dem antriebseitigen Flansch 19 zentriert,
2. ein ebenfalls in der Art einer Glocke ausgebildetes Sekundärelement 2, welches über eine beispielsweise in der DE 31 18 565 A1 oder der DE 35 32 759 C1 beschriebenen Mehrscheibenlamellenkupplung 20 im Wesentlichen drehfest mit der abtriebsseitigen Welle 21 verbindbar ist,
3. eine in der Zeichnungsfigur 2 im Detail skizzierte und nachfolgend näher beschriebene Federeinrichtung 3, welche Primärelement 1 und Sekundärelement 2 miteinander koppelt und mit Hilfe derer das Primärelement 1 und das Sekundärelement 2 um die hier mit dem Bezugszeichen R gekennzeichnete Drehachse begrenzt gegeneinander verdrehbar sind und
4. eine in der Zeichnungsfigur 3 im Detail skizzierte und nachfolgend näher beschriebene Reibeinrichtung 4 basierend auf drei aneinander reibenden reibflächentragenden Elementen 7, 8 und 1a mit Hilfe derer das Primärelement 1 und das Sekundärelement 2 in Reibverbindung verbringbar sind.

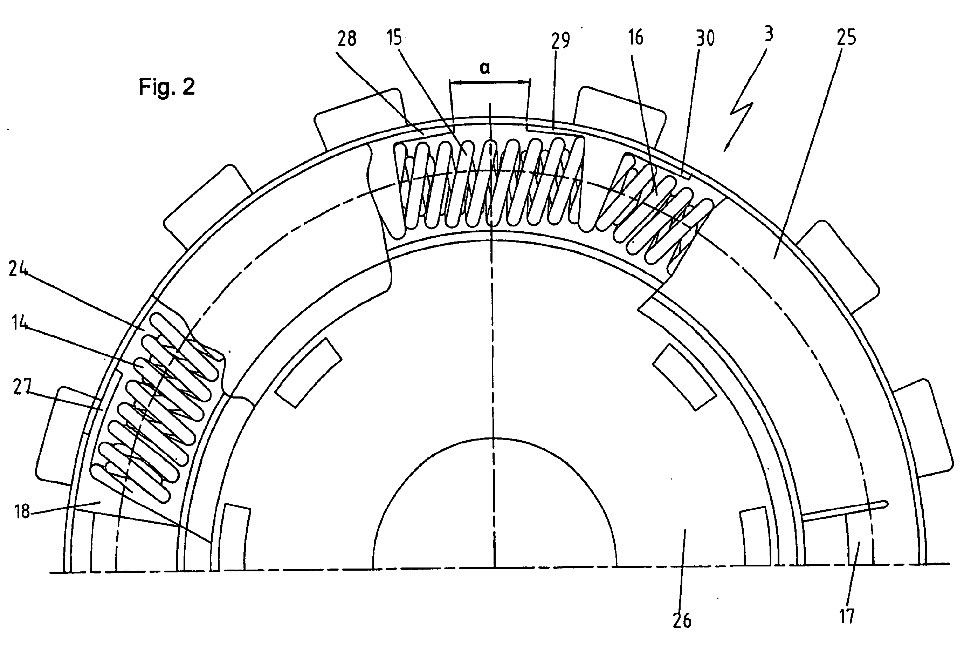

Die als Bestandteil der Vorrichtung zur Dämpfung von Drehschwingungen vorgestellte Federeinrichtung 3 gemäß den Figuren 1 und 2 ist im Beispiel in an sich bekannter Art und Weise ausgeführt. Die Federeinrichtung 3 umfaßt zwei ringförmige Seitenscheiben 24 und 25, welche in Umfangsrichtung U-förmig ausgebuchtet sind. Diese Seitenscheiben 24 und 25 sind an deren Außenumfang zusammengeführt und mit dem Primärelement 1 im Wesentlichen drehfest verbunden. Weiterhin ist eine im Wesentlichen ringförmig ausgebildete Mittelscheibe 26 vorgesehen, welche zwischen den beiden Seitenscheiben 24 und 25 angeordnet ist. Diese Mittelscheibe 26 ist über die nachstehend im Detail beschriebene Mehrscheibenlamellenkupplung 20 mit der abtriebsseitigen Welle 21 verbunden.

In dem von den beiden in Umfangsrichtung U-förmigen Auswölbungen gebildeten Raum zwischen den beiden Seitenscheiben 24 und 25 sind eine Mehrzahl von Federpaketen 14, 15 und 16 angeordnet, von denen drei exemplarisch in der Zeichnungsfigur 2 dargestellt sind. Die Anordnung dieser Federpakete 14,15 und 16 bildet einen zur Rotationsachse R koaxialen Kreis.

Einzelne Federpakete 14, 15, 16 oder mehrere hintereinander angeordnete Federpakete sind einendseitig mit den Seitenscheiben 24 und 25 verbunden und andernendseitig mit der Mittelscheibe 26, so dass hier über die Seitenscheiben 24 und 25 eine drehfeste Verbindung mit dem Primärelement 1 hergestellt ist und andernendseitig über die Mittelscheibe 26 sowie die Mehrscheibenlamellenkupplung 20 eine drehfeste Verbindung mit der Welle 21 bewerkstelligbar ist. Beispielhaft ist das einendseitige Koppelelement mit dem Primärelement 1 in der Zeichnungsfigur 2 durch das Bezugszeichen 17 gekennzeichnet und das andernendseitig angeordnete Koppelelement mit dem Sekundärelement 2 durch das Bezugszeichen 18. Zwischen benachbarten Koppelelementen 17,18 sind sogenannte Abstandshalter 27, 28, 29, 30 angeordnet, welche die maximale Kompression der Federpakete 14, 15 und 16 begrenzen. Ein Verdrehen der Seitenscheiben 24 und 25 gegenüber der Mittelscheibe 26 ist damit auf einen maximalen Drehwinkel von N x α begrenzt, wobei N die Anzahl der Federpakete 14, 15 und 16 wiedergibt und α den Drehwinkel angibt, welcher auf Grund der Kompression eines einzigen Federpakets 14, 15, 16 ermöglicht ist.

In axialer Richtung benachbart zu der vorgehend beschriebenen Federeinrichtung 3 ist die Reibeinrichtung 4 angeordnet. Diese Reibeinrichtung 4 besteht aus drei Elementen 7, 8 und 1a, welche Reibflächen 12.1, 12.2, 12.3, 12.4 aufweisenden mit denen sie aneinander grenzen. Diese Reibflächen 12.1, 12.2, 12.3, 12.4 aufweisenden Elemente 7, 8 und 1a sind kreisringförmig ausgebildet, wobei deren Zentralachse durch die Drehachse R gebildet ist. Ein eine Reibfläche 12.1 aufweisendes Element 7, welches nachfolgend als linkes reibflächentragendes Element 7 bezeichnet wird, ist hier durch eine geeignete Schraubverbindung mit dem Primärelement 1 im Wesentlichen drehfest verbunden. Das hieran angrenzende zwei Reibflächen 12.2, 12.3 aufweisende Element 8, nachfolgend als mittleres reibflächentragendes Element 8 bezeichnet, ist ähnlich der Mittelscheibe 26 drehfest mit dem Sekundärelement 2 verbunden aber axial verschieblich an dessen Außenumfang aufgesetzt. Dieses mittlere reibflächentragende Element 8 ist über die Kupplungseinrichtung 20 mit der Welle 21 koppelbar und im fest eingerückten Zustand des Betätigungszylinders 34 drehfest mit dieser Welle 21 verbunden. Das an das mittlere Element 8 andernseitig anschließende eine Reibfläche 12.4 aufweisende Element 1a, nachfolgend als rechtes reibflächentragendes Element 1a bezeichnet, ist vorliegend ein Bestandteil des Primärelements 1 und demzufolge starr mit diesem verbunden.

Die reibflächentragenden Elemente 7, 8 und 1a sind benachbart zueinander angeordnet. Die jeweiligen Reibflächen 12.1, 12.2, 12.3 und 12.4 sind gegeneinander ausgerichtet, so dass diese miteinander in Reibverbindung verbringbar sind.

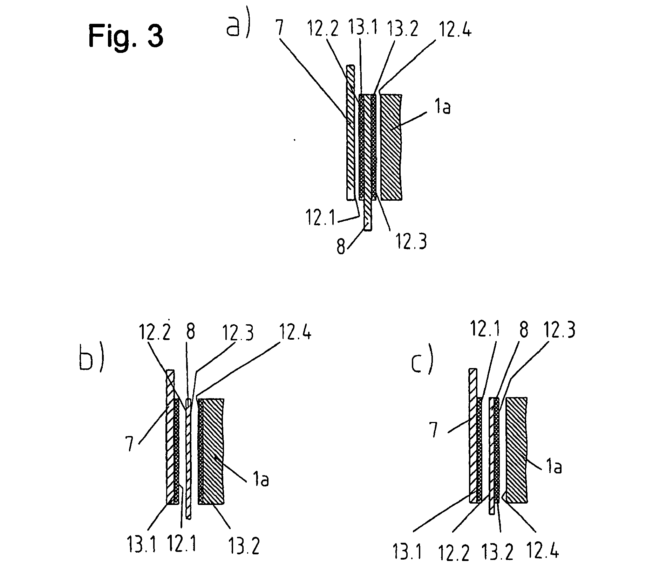

Die Fig. 3 zeigt diverse Ausführungsvarianten einer derartigen Reibeinrichtung 4, welche sich in der Ausgestaltung der reibflächentragenden Elemente 7, 8 und 1a unterscheiden.

Bei der Ausführungsvariante einer Reibeinrichtung 4 gemäß der Figur 3a) weist das mittlere reibflächentragende Element 8 an dessen beiden Stirnseiten Reibbeläge 13.1 und 13.2 auf. Die beiden anderen Elemente 7 und 1a weisen demgegenüber auf deren Stirnseiten keine derartigen Reibbeläge auf. Die Reibflächen 12.2 und 12.3 des mittleren Elements 8 werden vorliegend durch die freien Oberflächen der Reibbeläge 13.1, 13.2 gebildet. Die Reibflächen 12.1 und 12.4 des linken und rechten Elements 7, 1a werden unmittelbar durch die freien Oberflächen der Elemente 7, 1a selbst gebildet.

Bei der Ausführungsvariante einer Reibeinrichtung 4 gemäß der Figur 3b) weist das mittlere reibflächentragende Element 8 an dessen beiden Stirnseiten keine Reibbeläge auf. Die beiden anderen Elemente 7 und 1a weisen demgegenüber auf deren Stirnseiten derartige Reibbeläge 13.1, 13.2 auf. Die Reibflächen 12.2 und 12.3 des mittleren Elements 8 werden vorliegend durch die freien Oberflächen des mittleren Elements 8 selbst gebildet. Die Reibflächen 12.1 und 12.4 des linken und des rechten Elements 7, 1a werden demgegenüber durch die freien Oberflächen der Reibbeläge 13.1 und 13.2 gebildet.

Bei der Ausführungsvariante einer Reibeinrichtung 4 gemäß der Figur 3c) weist das rechte reibflächentragende Element 1a an dessen Stirnseite keinen Reibbelag auf. Die beiden anderen Elemente 7 und 8 weisen demgegenüber jeweils auf einer Stirnseite derartige Reibbeläge 13.1, 13.2 auf. Die Reibfläche 12.4 des rechten Elements 1a wird vorliegend durch die freien Oberflächen des rechten Elements 1a selbst gebildet. Entsprechendes gilt für die Reibfläche 12.2 des mittleren Elements 8. Die Reibflächen 12.1 und 12.3 des linken und des mittleren Elements 7, 8 werden demgegenüber durch die freien Oberflächen der Reibbeläge 13.1 und 13.2 gebildet.

Selbstverständlich ist es auch möglich, dass die Reibflächen benachbarter Elemente durch die Belagoberflächen von entsprechenden Reibbelägen gebildet werden.

Das linke reibflächentragende Element 7 und das mittlere reibflächentragende Element 8. sind in axialer Richtung verschieblich angeordnet. Das rechte reibflächentragende Element 1a kann im vorliegenden Beispiel keine axiale Verschiebebewegung ausführen.

Das linke reibflächentragende Element 7 wird von einer Mehrzahl in vorzugsweise in gleichem Abstand in Umfangsrichtung angeordneten Schraubenfedern 5, welche einendseitig von entsprechenden Halteeinrichtungen gehalten gegen das Primärelement 1 abgestützt sind, in axialer Richtung gegen das mittlere reibflächentragende Element 8 angedrückt gehalten. Durch diese durch die Mehrzahl der als Schraubenfedern ausgebildeten Federelemente 5 hervorgerufene Anpresskraft wird zwischen den benachbarten reibflächentragenden Elementen 7, 8 und 1a ein Reibschluß hervorgerufen, welcher die Drehbeweglichkeit des Primärelements 1 gegenüber dem Sekundärelement 2 und umgekehrt die Drehbeweglichkeit des Sekundärelements 2 gegenüber dem Primärelement 1 dämpft.

Bei dem vorgestellten Ausführungsbeispiel ist am Außenumfang des ersten reibflächentragenden Elements 7 reibflächenseitig, also in gegenüberliegender Anordnung zu den Federelementen 5, ein kreisringförmiges Kolbenelement 9 angeordnet. Es versteht sich für den Fachmann von selbst, dass am Umfang auch mehrere kleinere zylinderförmige Kolbenelemente angeordnet sein können.

Dieses Kolbenelement 9 (oder ggf. die Mehrzahl der kleinen Kolbenelemente) ist Bestandteil einer hydraulischen Betätigungseinrichtung, welche dazu vorgesehen ist, eine entgegen der durch die Federelemente 5 hervorgerufenen Betätigungskraft wirkende Gegenkraft zu erzeugen. Diese Gegenkraft ist in der Lage, den zwischen den reibflächentragenden Elementen 7, 8 und 1a wirkenden Reibschluß bzw. deren gegeneinander wirkende Reibkraft zu vermindern. Ausgehend von einer durch die Federelemente 5 hervorgerufenen im Wesentlichen konstanten Anpresskraft kann folglich die Dämpfungswirkung durch ein hydraulisches Ausrücken der in Reibverbindung miteinander stehenden reibflächentragenden Elemente 7, 8 und 1a gezielt reduziert werden.

Die als weiterer Bestandteil des Ausführungsbeispiels der Vorrichtung zur Dämpfung von Drehschwingungen vorgesehene Mehrscheibenlamellenkupplung 20 ist beispielhaft wie folgt ausgeführt:

Die naßlaufende Lamellenkupplung 20 umfaßt eine Mehrzahl von Lamellen 31. Eine erste Gruppe von Lamellen 31 ist mit dem lamellenträger 32 im wesentlichen drehfest verbunden, eine zweite Gruppe ist mit der Nabe 33 im Wesentlichen drehfest verbunden. Die jeweiligen Lamellen 31 der beiden Gruppen greifen in der Art einer Verzahnung ineinander. Beide Gruppen sind vorzugsweise in axialer Richtung relativ zueinander verschiebbar und können mittels des über den Leitungskanal 35 mit Druckmittel beaufschlagbaren Betätigungskolbens 34 paarweise in reibschlüssige Verbindung gebracht werden. Im Hinblick auf unterschiedliche Ausführungsvarianten sei beispielhaft auf die DE 31 18 565 A1, die DE 35 32 759 C1 oder dergleichen verwiesen.

Im vorliegenden Fall ist der Lamellenträger 32, welcher häufig auch als Außenlamellenträger bezeichnet ist, drehfest mit der abtriebsseitigen Welle 21 verbunden. Die Nabe 33, häufig auch als Innenlamellenträger bezeichnet, ist im vorliegenden Fall drehfest mit der Mittelscheibe 26 der Federeinrichtung 3 sowie mit dem mittleren reibflächentragenden Element 8 der Reibeinrichtung 4 verbunden, so dass bei geschlossener Mehrscheibenlamellenkupplung 20 eine drehfeste Verbindung der abtriebsseitigen Welle 21 mit dem Sekundärelement 2 bewerkstelligt ist.

Die vorliegende Ausführungsvariante gemäß der Figur 1 kombiniert -wie vorstehend im Detail beschrieben wurde- eine (Mehrscheibenlamellen-) Kupplung 20, welche sich bei nicht mit Druckmittel beaufschlagtem Betätigungskolben 24 im geöffneten Zustand befindet (in der Fachsprache als "normally open"-Kupplung 20 bezeichnet), und eine Reibeinrichtung 4, welche sich bei nicht mit Druckmittel beaufschlagten Kolbenelementen 9 aufgrund der Federkraft der Federelemente 5 im geschlossenen Zustand befindet (in der Fachsprache als "normally closed"-Reibeinrichtung 4 bezeichnet). Der Betätigungskolben 24 und das Kolbenelement 9 (oder ggf. die Kolbenelemente) sind dabei über die Leitungskanäle, 10 und 35 mit demselben Druckmittelraum 36 verbunden so dass eine Erhöhung des Drucks des Druckmittels in dem Druckmittelraum 36 sowohl zu einer Betätigung des Betätigungskolbens 24 der (Mehrscheibenlamellen-) Kupplung 20 als auch zu einer Betätigung der Kolbenelemente 9 der Reibeinrichtung 4 führt.

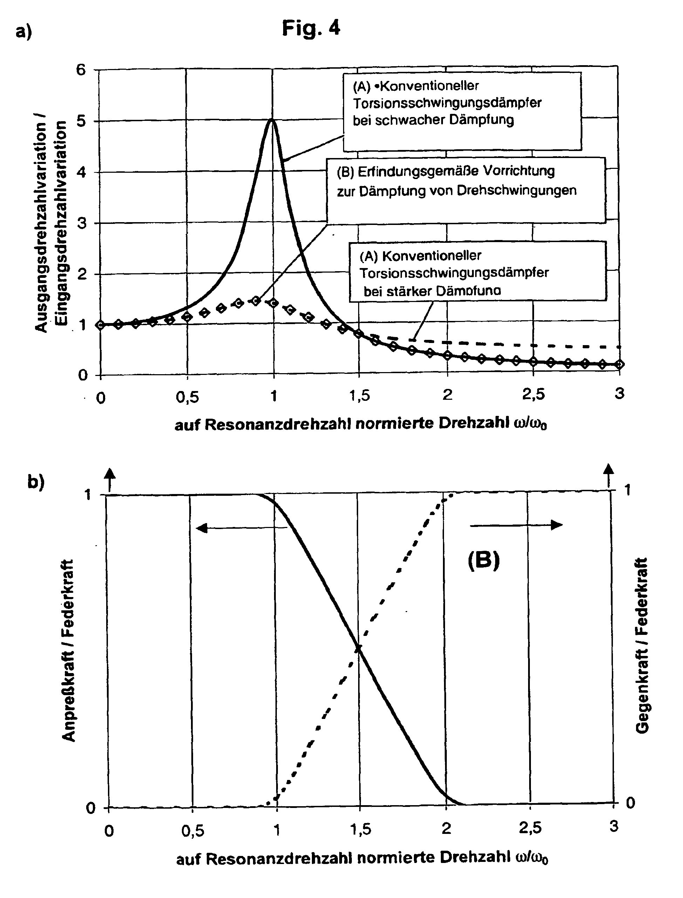

Nachfolgend wird nunmehr die Funktionsweise der in der Figur 1 dargestellten erfindungsgemäßen Vorrichtung zur Dämpfung von Drehschwingungen, deren Bestandteile vorstehend im Einzelnen vorgestellt wurden, erläutert. Hierzu zeigt die Figur 4a) in gegenüberliegender Darstellung das Übertragungsverhalten eines konventionellen Torsionsschwingungsdämpfers (A) und der hier vorgestellten erfindungsgemäßen Vorrichtung zur Dämpfung von Drehschwingungen(B) mit Reibeinrichtung 4 und (Mehrscheibenlamellen-) Kupplung 20.

Für die nachfolgende Betrachtung ist beispielhaft angenommen, dass der konventionelle Torsionsschwingungsdämpfer A sowie die erfindungsgemäße Vorrichtung zur Dämpfung von Drehschwingungen B antriebsseitig mit Drehzahlen ω zwischen 0 und 1800 Umdrehungen pro Minute beaufschlagt werden. Zusätzlich werden sowohl der konventionelle Torsionsschwingungsdämpfer A als auch die erfindungsgemäße Vorrichtung zur Dämpfung von Drehschwingungen B zum Schwingen angeregt, wobei die Periodendauer der Schwingung beispielhaft zu 100 ms angenommen wurde.

Infolge dieser Variation der Eingangsdrehzahl ω wird der konventionelle Torsionsschwingungsdämpfer A bei einer mittleren Drehzahl ωₒ von 600 Umdrehungen pro Minute quasi resonant angeregt. Um bei höheren Drehzahlen ω eine genügende Entkopplung zwischen Primär- und Sekundärseite zu gewährleisten, darf die dämpfende Reibung nicht sehr groß sein. Hierdurch kommt es im Resonanzbereich zu starken Drehschwingungsüberhöhungen der Sekundärseite gegenüber der Primärseite.

Demgegenüber findet bei der erfindungsgemäßen Vorrichtung zur Dämpfung von Drehschwingungen B gemäß den Figuren 1 bis 3 nahezu keine resonante Anregung statt, wie sich der Figur 4a) entnehmen läßt. Im Bereich niedriger Drehzahl ω<ωₒ folgt das erfindungsgemäße System aufgrund der gegenüber dem konventionellen Torsionsschwingungsdämpfer A höheren Dämpfungswirkung der Reibeinrichtung 4, die mit der Federeinrichtung 3 parallel geschaltet ist, abtriebsseitig weitgehend der antriebsseitigen Drehzahl ω. Bei hohen Drehzahlen ω>ωₒ verschwindet die Ausgangsdrehzahlvariation sowohl beim konventionellen A als auch beim erfindungsgemäßen System B weitgehend auf Grund der dann geringen Dämpfungswirkung der Federeinrichtung 3, die dann im wesentlichen allein dämpfend wirkt.

Die Ursache für das veränderte Dämpfungsverhalten ergibt sich aus der Figur 4b), in welcher das Verhältnis der Anpreßkraft zur Federkraft über der normierten Drehzahl ωₒ sowie das Verhältnis der Gegenkraft zur Federkraft des vorstehend beschriebenen erfindungsgemäßen Systems B gezeigt ist:

Im Bereich niedriger Drehzahl ω<ωₒ wirkt die durch die Betätigungskraft der Federelemente 5 hervorgerufene Anpreßkraft auf die aneinander reibenden reibflächentragenden Elemente 7, 8, 1a so dass eine hohe Dämpfung erfolgt (Reibeinrichtung 4 geschlossen, (Mehrscheibenlamellen-) Kupplung 20 geöffnet). Im Bereich hoher Drehzahl ω>ω₀ wird diese Anpreßkraft auf Grund der Gegenkraft der Kolbenelemente 9 reduziert (Reibeinrichtung 4 geöffnet, (Mehrscheibenlamellen-) Kupplung 20 geschlossen) und es wirkt nahezu ausschließlich die Dämpfung der Federeinrichtung 3.

Obwohl die vorstehend beschriebene Ausführungsvariante von einer "normally open"-Kupplung 20 und einer "normally closed"-Reibeinrichtung 4 ausgeht, sei noch einmal ausdrücklich darauf hingewiesen, dass insbesondere auch aus energetischen Gesichtspunkten die Kombination einer "normally closed"-Kupplung (welche z.B. mittels einer Federkraft geschlossen und mittels hydraulischem Druck geöffnet wird) mit einer "normally open" Reibeinrichtung (welche z.B. mittels einer Federkraft geöffnet und mittels hydraulischem Druck geschlossen wird) möglich ist.

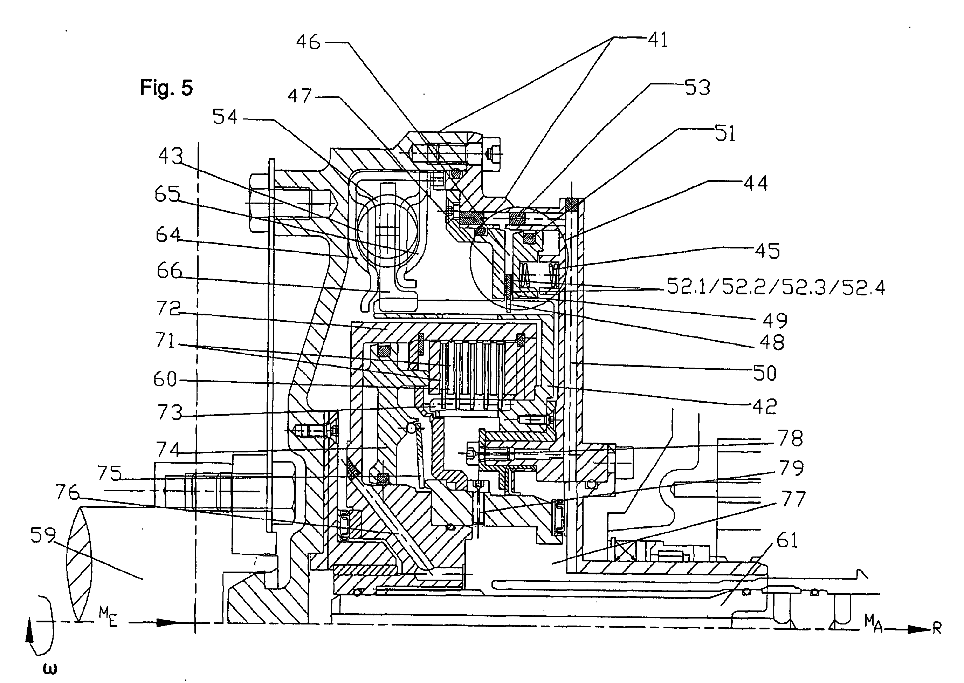

Ein weiteres Ausführungsbeispiel einer erfindungsgemäßen Vorrichtung zur Dämpfung von Drehschwingungen ist in der Figur 5 skizziert.

Die Figur 5 verdeutlicht ähnlich wie die Figur 1 an Hand eines Ausschnittes aus einem beispielhaft gewählten Antriebsstrang für ein Kraftfahrzeug einen möglichen Grundaufbau und die Funktionsweise einer erfindungsgemäß gestalteten Vorrichtung zur Dämpfung von Drehschwingungen.

Auf der linken Seite der Zeichnungsfigur ist ein Flansch 59 angedeutet, welcher wiederum mit einer Verbrennungskraftmaschine, einem Motor oder dergleichen gekoppelt ist. Diese Seite stellt die Antriebsseite des Antriebsstrangs dar.

Auf der rechten Seite des Zeichnungsblattes ist eine Welle 61 skizziert, welche wiederum mit einem hier nicht dargestellten Getriebe gekoppelt ist. Diese Seite stellt die Abtriebsseite des Antriebsstrangs dar..

Zwischen Flansch 59 und Welle 61 ist die erfindungsgemäße Vorrichtung zur Dämpfung von Drehschwingungen angeordnet. Ein mit der Drehzahl ω antriebsseitig über den Flansch 59 eingeleitetes antriebsseitiges Drehmoment M_{E} ist über die erfindungsgemäße Vorrichtung zur Dämpfung von Drehschwingungen in der vorgehend beschriebenen Art und Weise auf die abtriebsseitige Welle 61 übertragbar. Das abtriebsseitige Drehmoment ist in der Zeichnungsfigur wiederum durch das Bezugszeichen M_{A} kenntlich gemacht.

Hauptbestandteile des erfindungsgemäßen Systems zur Dämpfung von Drehschwingungen sind wiederum :
1. ein glockenförmiges antriebsseitiges Primärelement 41
2. ein ebenfalls in der Art einer Glocke ausgebildetes Sekundärelement 42, mit dessen abtriebsseitiger Kopplung über eine Mehrscheibenlamellenkupplung 60
3. eine Federeinrichtung 43, welche Primärelement 41 und Sekundärelement 42 miteinander koppelt und mit Hilfe derer das Primärelement 41 und das Sekundärelement 42 um die hier mit dem Bezugszeichen R gekennzeichnete Drehachse begrenzt gegeneinander verdrehbar sind und
4. eine Reibeinrichtung 44 basierend auf drei aneinander reibenden reibflächentragenden Elementen 47, 48 und 49 mit Hilfe derer das Primärelement 41 und das Sekundärelement 42 in Reibverbindung verbringbar sind.

Die als Bestandteil der Vorrichtung zur Dämpfung von Drehschwingungen vorgestellte Federeinrichtung 43 gemäß der Figur 5 ist zwar abweichend von den Figuren 1 und 2 jedoch in an sich bekannter Art und Weise ausgeführt. Die Federeinrichtung 43 umfaßt auch hier zwei ringförmige Seitenscheiben 64 und 65, welche in Umfangsrichtung U-förmig ausgebuchtet sind. Diese an deren Außenumfang zusammengeführten Seitenscheiben 64 und 65 sind mit dem Primärelement 41 im Wesentlichen drehfest verbunden. Weiterhin ist eine ebenfalls im Wesentlichen ringförmig ausgebildete Mittelscheibe 66 vorgesehen, welche zwischen den beiden Seitenscheiben 64 und 65 angeordnet ist. Diese Mittelscheibe 66 ist wie im vorangehenden Ausführungsbeispiel über die Mehrscheibenlamellenkupplung 60 mit der abtriebsseitigen Welle 61 verbunden.

In dem von den beiden in Umfangsrichtung U-förmigen Auswölbungen gebildeten Raum zwischen den beiden Seitenscheiben 64 und 65 sind wiederum eine Mehrzahl von Federpaketen angeordnet, deren Anordnung einen zur Rotationsachse R koaxialen Kreis bildet.

Einzelne Federpakete oder mehrere hintereinander angeordnete Federpakete sind einendseitig mit den Seitenscheiben 64 und 65 verbunden und andernendseitig mit der Mittelscheibe 66, so dass über die Seitenscheiben 64 und 65 eine drehfeste Verbindung mit dem Primärelement 1 und andernendseitig über die Mittelscheibe 66 sowie die Mehrscheibenlamellenkupplung 60 eine ebensolche Verbindung mit der Welle 61 herstellbar ist.

In axialer Richtung benachbart zu der vorgehend beschriebenen Federeinrichtung 43 ist die Reibeinrichtung 44 angeordnet. Diese Reibeinrichtung 44 besteht aus den drei reibflächentragenden Elementen 47, 48 und 49. Diese reiblächentragenden Elemente 47, 48 und 49 sind kreisringförmig mit einer durch die Drehachse R gebildeten Zentralachse ausgebildet. Ein reibflächentragendes Element 47 ist mittels einer geeigneten Schraubverbindung mit dem Primärelement 41 im Wesentlichen drehfest verbunden. Das zweite zu dem ersten Element 47 benachbart angeordnete reibflächentragende Element 48 ist auf dem Außenumfang des Sekundärelements 42 in axialer Richtung ax verschieblich aber im wesentlichen drehfest aufgesetzt. Dieses Element 48 ist somit zusammen mit der Mittelscheibe 66 über die Mehrscheibenlamellenkupplung 60 mit der Welle 61 gekoppelt. Das dritte reibflächentragende Element 49 ist benachbart zu dem zweiten reibflächentragenden Element 48 angeordnet über die Kopplung mehrerer Schraubenfedern 45 axial verschieblich geführt mit dem Primärelement 41 verbunden. Im vorliegenden Ausführungsbeispiel sind somit das mittlere zweite reibflächentragende Element 48 und das rechte dritte reibflächentragende Element 49 in axialer Richtung verschieblich ausgeführt, während das erste linke reibflächentragende Element 47 im vorliegenden Beispiel keine axiale Verschiebebewegung ausführen kann.

Die drei benachbart zueinander angeordneten Elemente 47, 48 weisen entsprechend dem vorbeschriebenen Ausführungsbeispiel gemäß den Figuren 1 bis 4 gegeneinander ausgerichtete Reibflächen 52.1, 52.2, 52.3 und 52.4 auf, welche miteinander in Reibverbindung verbringbar sind.

Das rechte reibflächentragende Element 49 wird von einer Mehrzahl in vorzugsweise in gleichem Abstand zueinander in Umfangsrichtung angeordneten Schraubenfedern 45, welche einendseitig von entsprechenden Halteeinrichtungen gehalten gegen das Primärelement 41 abgestützt sind, in axialer Richtung gegen das mittlere reibflächentragende Element 47 angedrückt gehalten. Durch diese durch die Mehrzahl der als Schraubenfedern ausgebildeten Federelemente 45 hervorgerufenen Anpresskraft wird zwischen den die Reibflächen 52.1, 52.2, 52.3 und 52.4 aufweisenden Elementen 47, 48 und 49 ein Reibschluß hervorgerufen, welcher die Drehbeweglichkeit des Primärelements 41 gegenüber dem Sekundärelement 42 und umgekehrt dämpft.

Im Gegensatz zur vorstehend beschriebenen Ausführungsform ist nunmehr zwischen dem linken die Reibfläche 52.1 aufweisenden Element 47 und dem verschiebbaren rechten die Reibfläche 52.4 aufweisenden Element 49 ein Druckmittelraum 46 vorgesehen, welcher Bestandteil der hydraulischen Betätigungseinrichtung ist. Dieser Druckmittelraum 46 ist mit Druckmittel beaufschlagbar. Eine Druckmittelbeaufschlagung bewirkt, dass sich innerhalb des von den Elementen 47 und 49 gebildeten Druckmittelraums 46 ein Überdruck ausbildet, welcher das rechte reibflächentragende Element 49 entgegen der durch die Federkraft der Schraubenfedern 45 hervorgerufenen Betätigungskraft verschiebt.

Bei dieser Variante wird sich zunutze gemacht, dass die Reibflächen 52.1, 52.2, 52.3 und 52.4 der in eingerücktem Zustand aneinander reibenden reibflächentragenden Elemente 47, 48 und 49 selbst als Dichtflächen wirken, indem sie den Druckmittelraum 46 mit wenigstens einer Außenfläche der Reibflächen 52.1, 52.2, 52.3 und 52.4 begrenzen.

Eine Druckmittelbeaufschlagung des Druckmittelraums 46 bewirkt hierbei jedoch nicht lediglich ein Trennen der benachbarten reibflächentragenden Elemente 47, 48 und 49 sondern darüber hinaus ein Öffnen des Druckmittelraumes 46 zur Umgebung. Zur Begrenzung eines damit verbundenen Druckmittelverlustes ist erfindungsgemäß eine Drosseleinrichtung 53 in dem Leitungskanal 50 vorgesehen, welche den Druckmittelabfluß durch die benachbarten ausgerückten reibflächentragenden Elemente 47, 48 und 49 unterbindet oder zumindest begrenzt.

Die als weiterer Bestandteil des Ausführungsbeispiels der Vorrichtung zur Dämpfung von Drehschwingungen vorgesehene Mehrscheibenlamellenkupplung 60 ist weitgehend identisch wie im vorangegangenen Beispiel ausgeführt:

Auch hier umfaßt die naßlaufende Mehrscheibenlamellenkupplung 60 eine Mehrzahl von Lamellen 71. Eine erste Gruppe von Lamellen 71 ist mit den Außenlamellenträger 72 im wesentlichen drehfest verbunden, eine zweite Gruppe ist mit dem

Innenlamellenträger 73 im Wesentlichen drehfest verbunden. Die jeweiligen Lamellen 71 der beiden Gruppen greifen in der Art einer Verzahnung ineinander. Beide Gruppen sind in axialer Richtung relativ zueinander verschiebbar und können auf diese Weise paarweise in reibschlüssige Verbindung gebracht werden. Der Außenlamellenträger 72 ist wiederum drehfest mit der abtriebsseitigen Welle 61 verbunden. Der Innenlamellenträger 73 ist drehfest mit der Mittelscheibe 66 der Federeinrichtung 43 sowie mit dem zweiten die Reibflächen 52.3 und 52.3 aufweisenden Element 48 der Reibeinrichtung 44 verbunden, so dass bei geschlossener Mehrscheibenlamellenkupplung 60 eine drehfeste Verbindung der abtriebsseitigen Welle 61 mit dem Sekundärelement 42 bewerkstelligt ist.

Entsprechend dem vorstehend beschriebenen Ausführungsbeispiel gemäß den Figuren 1 bis 4 kombiniert die vorliegende Ausführungsvariante gemäß der Figur 5 eine "normally open"-(Mehrscheibenlamellen-) Kupplung 60 und eine "normally closed"-Reibeinrichtung 44. Der Betätigungskolben 74 und der Druckmittelraum 46 sind dabei über die Leitungskanäle 50 und 76 mit demselben Druckmittelraum 77 verbunden so dass eine Erhöhung des Drucks des Druckmittels in dem Druckmittelraum 77 sowohl zu einer Betätigung des Betätigungskolbens 74 der (Mehrscheibenlamellen-) Kupplung 60 entgegen der Federkraft der Tellerfeder 75 als auch zu einer axialen Verschiebung des mittels der elastischen Dichteinrichtung 51 gegenüber der Umgebung abgedichteten rechten Elements 49 der Reibeinrichtung 44 entgegen der Federkraft der Schraubenfedern 45.

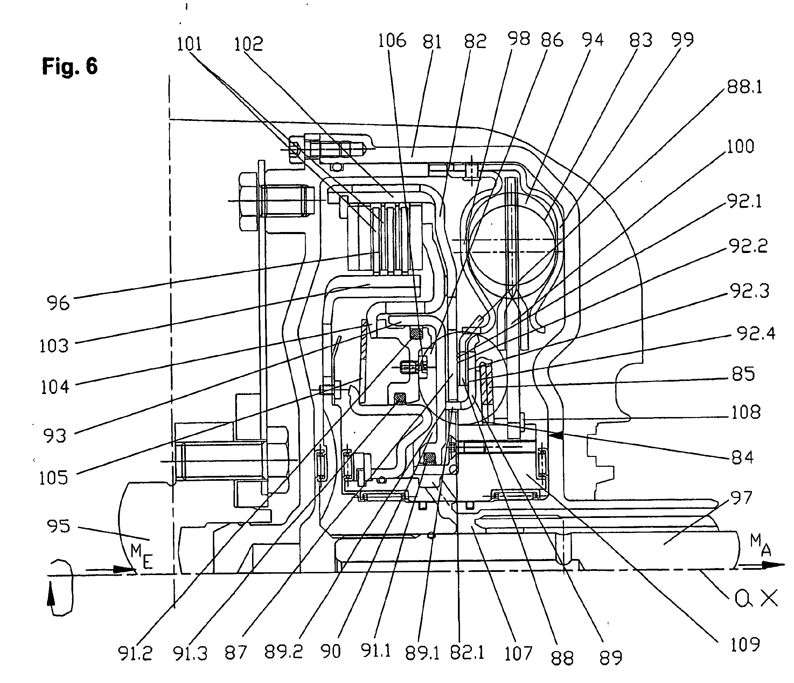

Die Figur 6 zeigt ein weiteres Ausführungsbeispiel einer erfindungsgemäßen Vorrichtung zur Dämpfung von Drehschwingungen, welche aufgrund einer gemeinsamen Nutzung eines Druckraumes für den hydraulischen Betätigungskolben der (Mehrscheibenlamellen-) Kupplung und die hydraulische Betätigungseinrichtung der Reibeinrichtung eine besonders kompakte Gestalt aufweist.

Die Figur 6 verdeutlicht ähnlich wie die Figur 1 und die Figur 5 anhand eines Ausschnittes aus einem beispielhaft gewählten Antriebsstrang für ein Kraftfahrzeug einen möglichen Grundaufbau und die Funktionsweise einer erfindungsgemäß gestalteten Vorrichtung zur Dämpfung von Drehschwingungen.

Auf der linken Seite der Zeichnungsfigur 6 ist ein Flansch 95 angedeutet, welcher entsprechend den vorstehend beschriebenen Ausführungsbeispielen mit einer Verbrennungskraftmaschine gekoppelt ist. Diese Seite stellt die Antriebsseite des Antriebsstrangs dar.

Auf der rechten Seite des Zeichnungsblattes ist eine Welle 97 skizziert, welche wiederum mit einem hier nicht dargestellten Getriebe gekoppelt ist. Diese Seite stellt die Abtriebsseite des Antriebsstrangs dar.

Zwischen Flansch 95 und Welle 97 ist die erfindungsgemäße Vorrichtung zur Dämpfung von Drehschwingungen angeordnet. Ein mit der Drehzahl ω über den Flansch 95 eingeleitetes antriebsseitiges Drehmoment M_{E} kann über die erfindungsgemäße Vorrichtung zur Dämpfung von Drehschwingungen auf die abtriebsseitige Welle 97 übertragen werden, wo es als abtriebsseitiges Drehmoment M_{A} abgreifbar ist.

Diese in der Figur 6 dargestellte Vorrichtung zur Dämpfung von Drehschwingungen umfaßt folgende Hauptbestandteile:
1. ein glockenförmiges antriebsseitiges Primärelement 81
2. ein über eine Mehrscheibenlamellenkupplung 96 mit der Welle 97 koppelbares Sekundärelement 82
3. eine Federeinrichtung 83 der vorstehend beschriebenen Art, welche das antriebsseitige Primärelement 81 und das abtriebsseitige Sekundärelement 82 begrenzt gegeneinander um die Drehachse R verdrehbar federnd miteinander koppelt und
4. eine auf drei aneinander reibenden Reibflächen 92.1, 92.2, 92.3 und 92.4 aufweisenden Elementen 87, 88 und 89 basierende Reibeinrichtung 84, welche dazu vorgesehen ist, die Drehbeweglichkeit des Sekundärelement 82 gegenüber dem Primärelement 81 bei Bedarf zu dämpfen.

Die als Bestandteil der Vorrichtung zur Dämpfung von Drehschwingungen vorgestellte Federeinrichtung 83 gemäß der Figur 6 ist in an sich bekannter Art ausgeführt. Die Federeinrichtung 83 umfaßt zwei ringförmige Seitenscheiben 98 und 99, welche in Umfangsrichtung U-förmig ausgebuchtet sind. Diese Seitenscheiben 98 und 99 sind an deren Außenumfang zusammengeführt und dort mit dem Primärelement 81 im Wesentlichen drehfest verbunden. Eine im Wesentlichen ringförmig ausgebildete Mittelscheibe 100 ist zwischen den beiden Seitenscheiben 98 und 99 angeordnet. Diese Mittelscheibe 100 ist mittels einer Verschraubung an dem Sekundärelement 82 befestigt.

In dem von den beiden in Umfangsrichtung U-förmigen Auswölbungen gebildeten Raum zwischen den beiden Seitenscheiben 98 und 99 sind koaxial zur Rotationsachse R eine Mehrzahl N von Federpaketen 94 aneinandergereiht.

Einzelne dieser Federpakete 94 oder mehrere hintereinander angeordnete Federpakete 94 sind in der vorstehend beschriebenen Weise (Fig. 2) einendseitig mit den Seitenscheiben 98 und 99 verbunden und andernendseitig mit der Mittelscheibe 100. Auf diese Weise ergibt sich eine elastische Federkopplung zwischen dem mit der Antriebswelle über den Flansch 95 verbundenen Primärelement 81 und dem über die Mehrscheibenlamellenkupplung 96 mit der abtriebsseitigen Welle 97 koppelbaren Sekundärelement 82.

In axialer Richtung benachbart zu der Mittelscheibe 100 der vorstehend beschriebenen Federeinrichtung 83 ist die vorstehend erwähnte Reibeinrichtung 84 angeordnet, deren Bestandteile in der in Rede stehenden Zeichnungsfigur mit Hilfe eines Kreises kenntlich gemacht sind. Diese Reibeinrichtung 84 besteht demzufolge aus drei jeweils wenigstens eine Reibfläche 92.1, 92.2, 92.3, 92.4 aufweisenden Elementen 87, 88 und 89. Diese Elemente 87, 88 und 89 sind im wesentlichen kreisringförmig ausgebildet. Sie sind koaxial zur Drehachse R und benachbart zueinander angeordnet.

Das linke Element 87 mit der Reibfläche 92.1 ist integraler Bestandteil des Sekundärelements 82. Das zweite zu dem linken Element 87 benachbart angeordnete mittlere Element 88 ist mit seinem radial nach außen abstehenden Übergangsende 88.1 in axialer Richtung ax verschieblich aber im wesentlichen drehfest mit der mit dem Primärelement 81 starr gekoppelten Seitenscheibe 98 verbunden. Das dritte zu dem mittleren Element 88 benachbart angeordnete in axialer Richtung verschiebliche rechte Element 89 weist innenumfangsseitig diverse fingerartig in axialer Richtung abstehende Übergangsenden 89.1 auf. Diese Übergangsenden 89.1 sind durch axial verlaufende Öffnungen 82.1 im Sekundärelement 82 hindurchgeführt. Die Stirnseiten 89.2 dieser Übergangsenden 89.1 stützen sich auf einem in axialer Richtung ax verschieblich geführten hydraulischen Betätigungskolben 93 ab. Die freie Ringfläche des rechten Elements 89 stützt sich axial auf einem an der Mittelscheibe 100 in axialer Richtung ax abgestützten Tellerfederpaket 85 in Form zweier geschichteter Tellerfedern ab (ggf. kann auch eine einzelne Tellerfeder eingesetzt werden) ab.

Die Mittelscheibe 100 wird axial von einem Sicherungsring 108 gehalten, der den axialen Kraftfluss über die Nabe 109 mit dem hieran angeschraubten Sekundärelement 82 schließt.

Die drei benachbart zueinander angeordneten Elemente 87, 88, 89 weisen entsprechend den vorstehend beschriebenen Ausführungsbeispielen entsprechend den Figuren 1 und 5 gegeneinander ausgerichtete Reibflächen 92.1, 92.2, 92.3 und 92.4 auf, welche miteinander in Reibverbindung verbringbar sind. Es versteht sich für den Fachmann von selbst, dass die entsprechenden Reibflächen auch durch die Oberflächen von auf den Elementen 87, 88, 89 angebrachten Reibbelägen gebildet sein können.

Ähnlich den vorstehend beschriebenen Ausführungsbeispielen wird das rechte Element 89 von einem Federelement, hier einer Tellerfeder 85, in den übrigen Beispielen von Schraubenfedern 5, 45 in axialer Richtung gegen das mittlere Element 88 angedrückt gehalten. Durch diese durch das Tellerfederpaket 85 hervorgerufenen Anpreßkraft wird zwischen den die Reibflächen 92.1, 92.2, 92.3 und 92.4 aufweisenden Elementen 87, 88 und 89 ein Reibschluß hervorgerufen, welcher die Drehbeweglichkeit des Primärelements 81 gegenüber dem Sekundärelement 82 und umgekehrt dämpft.

Die naßlaufende (Kühlmittelversorgung über Schrauberidrossel 106 aus dem Druckmittelraum 86) Mehrscheibenlamellenkupplung 96 umfaßt eine Mehrzahl von Lamellen 101. Eine erste Gruppe dieser Lamellen 101 ist mit den Außenlamellenträger 102 im wesentlichen drehfest verbunden, eine zweite Gruppe ist mit dem Innenlamellenträger 103 im Wesentlichen drehfest verbunden. Die jeweiligen Lamellen 101 der beiden Gruppen greifen in der Art einer Verzahnung ineinander. Beide Gruppen sind in axialer Richtung relativ zueinander verschiebbar und können mittels eines gegen den Druck einer Tellerfeder 105 wirkenden hydraulischen. Betätigungskolbens 104 paarweise in reibschlüssige Verbindung gebracht werden.

Der Außenlamellenträger 102 ist vorliegend integraler Bestandteil des Sekundärelements 82. Der Innenlamellenträger 103 ist drehfest mit der abtriebsseitigen Welle 97 verbunden. Bei geschlossener Mehrscheibenlamellenkupplung 96 ergibt sich somit eine Kopplung von Sekundärelement 82 und (Abtriebs-) Welle 97.
Die in Rede stehende Vorrichtung zeichnet sich dadurch aus, dass der hydraulische Betätigungskolben 104 der Mehrscheibenlamellenkupplung 96 und der hydraulische Betätigungskolben 93 der Reibeinrichtung 84 im wesentlichen einen gemeinsamen Druckmittelraum 86 einschließen. Der hydraulische Betätigungskolben 93 der Reibeinrichtung 84 ist dabei mittels der elastischen Dichteinrichtung 91.1 gegenüber der Umgebung abgedichtet an dem Sekundärelement 82 und mittels der elastischen Dichteinrichtung 91.2 gegenüber der Umgebung abgedichtet an dem hydraulischen Betätigungskolben 104 der Mehrscheibenlamellenkupplung 96 in axialer Richtung verschieblich geführt. Der hydraulische Betätigungskolben 104 der Mehrscheibenlamellenkupplung 96 ist ebenso einerseits mittels der elastischen Dichteinrichtung 91.2 gegenüber der Umgebung abgedichtet an dem hydraulischen Betätigungskolben 93 der Reibeinrichtung 84 und andererseits mittels der elastischen Dichteinrichtung 91.3 gegenüber der Umgebung abgedichtet an dem Sekundärelement 82 in axialer Richtung verschieblich geführt.

(In diesem Zusammenhang sei darauf hingewiesen, dass der hydraulische Betätigungskolben der Lamellenkupplung auch als Bestandteil der hydraulischen Betätigungseinrichtung der Reibeinrichtung ausgeführt sein könnte, ohne dass die Funktionsweise des Systems geändert würde, jedoch mit den Vorteilen einer reduzierten Anzahl beweglicher Bauteile und einer noch kompakteren Bauweise.)

Entsprechend den vorstehend beschriebenen Ausführungsbeispielen gemäß den Figuren 1 bis 5 kombiniert die vorliegende Ausführungsvariante gemäß der Figur 6 eine "normally open"- (Mehrscheibenlamellen-) Kupplung 96 und eine "normally closed"-Reibeinrichtung 84. Eine Erhöhung des Drucks des Druckmittels in dem Druckmittelraum 86 über den Leitungskanal 90 aus dem Druckmittelraum 107 führt sowohl zu einer Betätigung des Betätigungskolbens 104 der (Mehrscheibenlamellen-) Kupplung 96 entgegen der Federkraft der gegen das Sekundärelement 82 abgestützten Tellerfeder 105 (Schließen der Kupplung 96) als auch zu einer Betätigung des Betätigungskolbens 93 der Reibeinrichtung 84 entgegen der Federkraft der gegen die Mittelscheibe 100 (und damit das Sekundärelement 82) abgestützten Tellerfeder 85 (d.h. Verringern der auf die Elemente 87, 88, 89 wirkenden Anpreßkraft und somit Öffnen der Reibeinrichtung 84).

### Bezugszeichenliste

- 1: Primärelement
- 1a: rechtes reibflächentragendes Element
- 2: Sekundärelement
- 3: Federeinrichtung
- 4: Reibeinrichtung
- 5: Federelement (Schraubenfeder)
- 6: Druckmittelraum
- 7: linkes reibflächentragendes Element
- 8: mittleres reibflächentragendes Element
- 9: Kolbenelement
- 10: Leitungskanal
- 11: elastische Dichteinrichtung
- 12.1: Reibfläche
- 12.2: Reibfläche
- 12.3: Reibfläche
- 12.4: Reibfläche
- 13.1: Reibbelag
- 13.2: Reibbelag
- 14: Federpaket
- 15: Federpaket
- 16: Federpaket
- 17: Koppelelement mit Primärelement
- 18: Koppelelement mit Sekundärelement
- 19: Flansch
- 20: Mehrscheibenlamellenkupplung
- 21: Welle
- 22: Zentrierzapfen
- 23: Zwischenflansch ("Flexplate")
- 24: Seitenscheibe
- 25: Seitenscheibe
- 26: Mittelscheibe
- 27: Abstandshalter
- 28: Abstandhalter
- 29: Abstandhalter
- 30: Abstandhalter
- 31: Lamelle
- 32: Lamellenträger
- 33: Nabe
- 34: Betätigungskolben
- 35: Leitungskanal
- 36: Druckmittelraum
- 37: Schraubendrossel für Kühlmittel
- 38: Schraubendrossel für Kühlmittel

- 41: Primärelement
- 42: Sekundärelement
- 43: Federeinrichtung
- 44: Reibeinrichtung
- 45: Federelement (Schraubenfeder)
- 46: Druckmittelraum
- 47: linkes reibflächentragendes Element
- 48: mittleres reibflächentragendes Element
- 49: rechtes reibflächentragendes Element
- 50: Leitungskanal
- 51: elastische Dichteinrichtung
- 52.1: Reibfläche
- 52.2: Reibfläche
- 52.3: Reibfläche
- 52.4: Reibfläche
- 53: Drosseleinrichtung
- 54: Federpaket
- 59: Flansch
- 60: Mehrscheibenlamellenkupplung
- 61: Welle
- 64: Seitenscheibe
- 65: Seitenscheibe
- 66: Mittelscheibe
- 71: Lamelle
- 72: Außenlamellenträger
- 73: Innenlamellenträger
- 74: Betätigungskolben
- 75: Tellerfeder
- 76: Leitungskanal
- 77: Druckmittelraum
- 78: Schraubendrossel für Kühlmittel
- 79: Schraubendrossel für Kühlmittel

- 81: Primärelement
- 82: Sekundärelement
- 82.1: Öffnung
- 83: Federeinrichtung
- 84: Reibeinrichtung
- 85: Tellerfederpaket
- 86: Druckmittelraum
- 87: linkes eine Reibfläche 92.1 aufweisendes Element
- 88: mittleres zwei Reibflächen 92.2, 92.3 aufweisendes Element
- 88.1: Übergangsende
- 89: rechtes eine Reibfläche 92.4 aufweisendes Element
- 89.1: Übergangsende
- 89.2: Stirnseite
- 90: Leitungskanal
- 91.1: elastische Dichteinrichtung
- 91.2: elastische Dichteinrichtung
- 91.3: elastische Dichteinrichtung
- 92.1: Reibfläche
- 92.2: Reibfläche
- 92.3: Reibfläche
- 92.4: Reibfläche
- 93: hydraulischer Betätigungskolben
- 94: Federpaket
- 95: Flansch
- 96: Mehrscheibenlamellenkupplung
- 97: Welle
- 98: Seitenscheibe
- 99: Seitenscheibe
- 100: Mittelscheibe
- 101: Lamelle
- 102: Außenlamellenträger
- 103: Innenlamellenträger
- 104: hydraulischer Betätigungskolben
- 105: Tellerfeder
- 106: Schraubendrossel für Kühlmittel
- 107: Druckmittelraum
- 108: Sicherungsring
- 109: Nabe

- α: Winkel
- R: Drehachse
- M_{E}.: antriebsseitiges Drehmoment
- M_{A}: abtriebsseitiges Drehmoment
- ω: Drehzahl
- ω₀: Resonanzdrehzahl
- N: Anzahl der Federpakete

## Patentansprüche

1. Vorrichtung zur Dämpfung von Drehschwingungen mit wenigstens einem Primärelement (1, 41, 81) und einem Sekundärelement (2, 42, 82), welche mittels einer Federeinrichtung (3, 43, 83) miteinander koppelbar und um eine Drehachse (R) begrenzt gegeneinander verdrehbar sind und welche mittels einer wenigstens zwei miteinander von einer Krafterzeugungseinrichtung erzeugbaren, Reibschluss hervorrufenden Anpreßkraft beaufschlagbar aneinander reibbar ausgebildete Elemente (7, 8, 1a; 47, 48, 49; 87, 88, 89) umfassenden Reibeinrichtung (4, 44, 84) miteinander in Reibverbindung verbringbar sind
**dadurch gekennzeichnet, dass**
die Krafterzeugungseinrichtung (5, 6, 9, 10; 45, 46, 50, 51, 53; 85, 86, 90, 91.1, 91.2, 93) eine mechanische Betätigungseinrichtung (5, 45, 85) zur Erzeugung einer Betätigungskraft und eine hydraulische Betätigungseinrichtung (9, 10, 11; 46, 50, 51, 53; 86, 90, 91.1, 91.2, 93) zur Erzeugung einer Gegenkraft umfaßt, wobei die Anpresskraft eine Vektorsumme der Betätigungskraft und der Gegenkraft umfaßt.

2. Vorrichtung nach Anspruch 1,
**dadurch gekennzeichnet, dass** die mechanische Betätigungseinrichtung wenigstens ein Federelement (5, 45, 85) umfaßt.

3. Vorrichtung nach einem der vorangegangenen Ansprüche,
**dadurch gekennzeichnet, dass** die Vorrichtung eine naßlaufende Kupplungs- und / oder Getriebeanordnung (20, 60, 96) umfaßt, die mit einer Kühl- und / oder Druckflüssigkeit betrieben ist, und dass die hydraulische Betätigungseinrichtung (9, 10, 11; 46, 50, 51; 86, 90, 91.1, 91.2, 93) eine Druckmittelversorgungseinrichtung (10, 50, 90) zum Versorgen der hydraulischen Betätigungseinrichtung (9, 10, 11; 46, 50, 51, 86, 90, 91) mit Druckmittel umfaßt, mit dessen Hilfe die Gegenkraft erzeugbar ist und dass das Druckmittel die Kühl- und / oder Druckflüssigkeit ist.

4. Vorrichtung nach Anspruch 3,
**dadurch gekennzeichnet, dass** die Druckmittelversorgungseinrichtung (10, 50, 90) Bestandteil der naßlaufenden Kupplungs- und / oder Getriebeanordnung (20, 60, 96) ist.

5. Vorrichtung nach Anspruch 3 oder 4,
**dadurch gekennzeichnet, dass** die Kupplungs- und / oder Getriebeanordnung eine Lamellenkupplung (20, 60, 96) ist.

6. Vorrichtung nach Anspruch 5,
**dadurch gekennzeichnet, dass** die Lamellenkupplung (20, 60, 96) eine "normally open"-Kupplung ist und die Reibeinrichtung (4, 44, 84) eine "normally closed"-Reibeinrichtung ist oder dass die Lamellenkupplung eine "normally closed"-Kupplung ist und die Reibeinrichtung eine "normally open"-Reibeinrichtung ist.

7. Vorrichtung nach Anspruch 6,
**dadurch gekennzeichnet, dass** der hydraulische Betätigungskolben (104) der Lamellenkupplung (96) und die hydraulische Betätigungseinrichtung (93) der Reibeinrichtung (84) im wesentlichen einen gemeinsamen Druckmittelraum (86) einschließen.

8. Vorrichtung nach Anspruch 7,
**dadurch gekennzeichnet, dass** der hydraulische Betätigungskolben der Lamellenkupplung Bestandteil der hydraulischen Betätigungseinrichtung der Reibeinrichtung ist oder dass die hydraulische Betätigungseinrichtung der Reibeinrichtung Bestandteil des hydraulischen Betätigungskolbens der Lamellenkupplung ist.

9. Vorrichtung nach einem der vorangegangenen Ansprüche,
**dadurch gekennzeichnet, dass** zumindestens eines der reibflächentragenden Elemente (7, 8, 48, 49, 88, 89) gegenüber zumindestens einem der benachbarten reibflächentragenden Elemente (1a, 47, 87) im Wesentlichen senkrecht zu den jeweiligen Reibflächen (12.1, 12.2, 12.3, 12.4; 52.1, 52.2, 52.3, 52.4; 92.1, 92.2, 92.3, 92.4) verschiebbar ist.

10. Vorrichtung nach Anspruch 9,
**dadurch gekennzeichnet, dass** das wenigstens eine Federelement (5, 45, 85) das wenigstens eine gegenüber dem benachbarten reibflächentragenden Element (1a, 47, 87) verschiebbare reibflächentragende Element (7, 8, 48, 49, 88, 89) gegen das benachbarte reibflächentragende Element (1a, 47, 87) einrückend hält.

11. Vorrichtung nach Anspruch 9 oder 10,
**dadurch gekennzeichnet, dass** die hydraulische Betätigungseinrichtung ein mit Hilfe eines angrenzenden Druckmittelraumes (6, 86) mit einem Druckmittel beaufschlagbares Kolbenelement (9, 93) aufweist, welches mit dem Druckmittel beaufschlagt das wenigstens eine gegenüber dem benachbarten reibflächentragenden Element (1a, 87) verschiebbare reibflächentragende Element (9, 89) von dem benachbarten flächentragenden Element (8, 88) ausrückend hält.

12. Vorrichtung nach Anspruch 9 oder 10,
**dadurch gekennzeichnet, dass** zwischen dem wenigstens einen gegenüber dem benachbarten reibflächentragenden Element (47) verschiebbaren reibflächentragenden Element (49) und dem benachbarten reibflächentragenden Element (47) ein Druckmittelraum (46) gebildet ist, welcher Bestandteil der hydraulischen Betätigungseinrichtung ist, wobei der Druckmittelraum (46) mit einem Druckmittel beaufschlagbar ist, so dass das wenigstens eine gegenüber den benachbarten reibflächentragenden Element (47) verschiebbare reibflächentragenden Element (49) von dem benachbarten reibflächentragenden Element (47) ausrückend haltbar ist.

13. Vorrichtung nach Anspruch 12,
**dadurch gekennzeichnet, dass** eine Drosseleinrichtung (53) zum Begrenzen eines Druckmittelverlustes vorgesehen ist.

14. Vorrichtung nach einem der Anspruche 11 bis 13,
**dadurch gekennzeichnet, dass** eine Dichteinrichtung (11, 51, 91.1, 91.2, 91.3) zum Abdichten des Druckmittelraums (6, 46, 86) vorgesehen ist.

15. Antriebsstrang mit einer Vorrichtung nach einem der vorangegangenen Ansprüche.

## Claims

1. A device for damping torsional vibrations having at least one primary element (1, 41, 81) and a secondary element (2, 42, 82), which can be coupled together by means of a spring device (3, 43, 83) and are capable of limited rotation with respect to one another about an axis of rotation (R), and which can be brought into frictional connection with one another by means of a friction device (4, 44, 84) comprising at least two elements (7, 8, 1a; 47, 48, 49; 87, 88, 89) which are constructed such that they can be acted upon by a pressure force and can rub against one another, which pressure force can be generated by a force-generating device and results in frictional locking,
**characterised in that**
the force-generating device (5, 6, 9, 10; 45, 46, 50, 51, 53; 85, 86, 90, 91.1, 91.2, 93) comprises a mechanical actuating device (5, 45, 85) for generating an actuating force and a hydraulic actuating device (9, 10, 11; 46, 50, 51, 53; 86, 90, 91.1, 91.2, 93) for generating a counter-force, the pressure force being a vector sum of the actuating force and the counter-force.

2. A device according to Claim 1,
**characterised in that** the mechanical actuating device comprises at least one spring element (5, 45, 85).

3. A device according to one of the preceding claims,
**characterised in that** the device comprises a wet-running clutch and/or gear arrangement (20, 60, 96) which is operated by a cooling and/or hydraulic fluid, and **in that** the hydraulic actuating device (9, 10, 11; 46, 50, 51; 86, 90, 91.1, 91.2, 93) comprises a hydraulic-medium supply device (10, 50, 90) for supplying the hydraulic actuating device (9, 10, 11; 46, 50, 51, 86, 90, 91) with hydraulic medium which can be used to generate the counter-force, and **in that** the hydraulic medium is the cooling and/or hydraulic fluid.

4. A device according to Claim 3,
**characterised in that** the hydraulic-medium supply device (10, 50, 90) is a component of the wet-running clutch and/or gear arrangement (20, 60, 96).

5. A device according to Claim 3 or 4,
**characterised in that** the clutch and/or gear arrangement is a multi-plate clutch (20, 60, 96).

6. A device according to Claim 5,
**characterised in that** the multi-plate clutch (20, 60, 96) is a "normally open" clutch and the friction device (4, 44, 84) is a "normally closed" friction device or **in that** the multi-plate clutch is a "normally closed" clutch and the friction device is a "normally open" friction device.

7. A device according to Claim 6,
**characterised in that** the hydraulic actuating piston (104) of the multi-plate clutch (96) and the hydraulic actuating device (93) of the friction device (84) substantially enclose a common hydraulic-medium chamber (86).

8. A device according to Claim 7, **characterised in that** the hydraulic actuating piston of the multi-plate clutch is a component of the hydraulic actuating device of the friction device or **in that** the hydraulic actuating device of the friction device is a component of the hydraulic actuating piston of the multi-plate clutch.

9. A device according to one of the preceding claims,
**characterised in that** at least one of the friction-face-bearing elements (7, 8, 48, 49, 88, 89) can be displaced substantially perpendicularly to the respective friction faces (12.1, 12.2, 12.3, 12.4; 52.1, 52.2, 52.3, 52.4; 92.1, 92.2, 92.3, 92.4) with respect to at least one of the adjacent friction-face-bearing elements (1a, 47, 87).

10. A device according to Claim 9,
**characterised in that** the at least one spring element (5, 45, 85) holds the at least one friction-face-bearing element (7, 8, 48, 49, 88, 89) which can be displaced with respect to the adjacent friction-face-bearing element (1a, 47, 87) such that it engages in the adjacent friction-face-bearing element (1a, 47, 87).

11. A device according to Claim 9 or 10,
**characterised in that** the hydraulic actuating device has a piston element (9, 93) which can be acted upon by a hydraulic medium with the aid of an adjacent hydraulic-medium chamber (6, 86) and, acted upon by the hydraulic medium, holds the at least one friction-face bearing element (9, 89) which can be displaced with respect to the adjacent friction-face-bearing element (1a, 87) such that it is disengaged from the adjacent friction-face-bearing element (8, 88).

12. A device according to Claim 9 or 10,
**characterised in that**, between the at least one friction-face-bearing element (49) which can be displaced with respect to the adjacent friction-face bearing element (47) and the adjacent friction-face-bearing element (47), a hydraulic-medium-chamber (46) is formed which is a component of the hydraulic actuating device, it being possible for the hydraulic-medium chamber (46) to be acted upon by a hydraulic medium so that the at least one friction-face-bearing element (49) which can be displaced with respect to the adjacent friction-face-bearing element (47) can be held disengaged from the adjacent friction-face-bearing element (47).

13. A device according to Claim 12,
**characterised in that** a throttle device (53) is provided for restricting the loss of hydraulic medium.

14. A device according to one of Claims 11 to 13,
**characterised in that** a sealing device (11, 51, 91.1, 91.2, 91.3) is provided for sealing the hydraulic-medium chamber (6, 46, 86).

15. A drive train having a device according to one of the preceding claims.

## Revendications

1. Dispositif pour amortir des vibrations en rotation, avec au moins un élément primaire (1, 41, 81) et (un élément secondaire (2, 42, 82), couplés entre eux au moyen d'un dispositif élastique (3, 43, 83) et susceptibles de tourner l'un par rapport à l'autre de façon limitée autour d'un axe de rotation (R) et qui sont susceptibles d'être placés ensemble en liaison de friction, au moyen d'un dispositif de frottement (4, 44, 84), comprenant au moins deux éléments (7, 8, 1a; 47, 48, 49; 87, 88, 89) réalisés de manière à pouvoir frotter l'un sur l'autre, susceptible d'être sollicité par une force de pressage, susceptible d'être produite par un dispositif de production de force, provoquant une liaison par friction,
**caractérisé en ce que**
le dispositif de production de force (5, 6, 9, 10; 45, 46, 50, 51, 53; 85, 86, 90, 91.1, 91.2, 93) comprend un dispositif d'actionnement (5, 45, 85) mécanique, pour produire une force d'actionnement, et un dispositif d'actionnement (9, 10, 11; 46, 50, 51, 53; 86, 90, 91.1, 91.2, 93) hydraulique, pour produire une force antagoniste, la force de pressage comprenant un vecteur somme de la force d'actionnement et de la force antagoniste.

2. Dispositif selon la revendication 1, **caractérisé en ce que** le dispositif d'actionnement mécanique comprend au moins un élément élastique (5, 45, 85).

3. Dispositif selon l'une des revendications précédentes, **caractérisé en ce que** le dispositif comprend un dispositif d'embrayage et/ou de transmission (20, 60, 96) à fonctionnement humide, fonctionnant avec un liquide de refroidissement et/ou à pression, et **en ce que** le dispositif d'actionnement hydraulique (9, 10, 11; 46, 50, 51; 86, 90, 91.1, 91.2, 93) comprend un dispositif d'alimentation en fluide sous pression (10, 50, 90), pour assurer l'alimentation du dispositif d'actionnement hydraulique (9, 10, 11; 46, 50, 51, 86, 90, 91) en fluide sous pression, à l'aide duquel la force antagoniste peut être produite, et **en ce que** le fluide sous pression est le liquide de refroidissement et/ou à pression.

4. Dispositif selon la revendication 3, **caractérisé en ce que** le dispositif d'alimentation en fluide sous pression (10, 50, 90) fait partie du dispositif d'embrayage et/ou de transmission (20, 60, 96) à fonctionnement humide.

5. Dispositif selon la revendication 3 ou 4, **caractérisé en ce que** le dispositif d'embrayage et/ou de transmission est un embrayage à lamelles (20, 60, 96).

6. Dispositif selon la revendication 5, **caractérisé en ce que** l'embrayage à lamelles (20, 60, 96) est un embrayage "normalement ouvert" et le dispositif à friction (4, 44, 84) est un dispositif de friction "normalement fermé", ou en ce que l'embrayage à lamelles est un embrayage "normalement fermé" et le dispositif à friction est un dispositif à friction "normalement ouvert".

7. Dispositif selon la revendication 6, **caractérisé en ce que** le piston d'actionnement hydraulique (104) de l'embrayage à lamelles (96) et le dispositif d'actionnement hydraulique (93) du dispositif de friction (84) enclosent essentiellement une enceinte à fluide sous pression (86) commune.

8. Dispositif selon la revendication 7, **caractérisé en ce que** le piston d'actionnement hydraulique de l'embrayage à lamelles fait partie du dispositif d'actionnement hydraulique du dispositif de friction, ou **en ce que** le dispositif d'actionnement hydraulique du dispositif à friction fait partie du piston d'actionnement hydraulique de l'embrayage à lamelles.

9. Dispositif selon l'une des revendications précédentes, **caractérisé en ce qu'**au moins l'un des éléments (7, 8, 48, 49, 88, 89) à transmission par surface de friction est déplaçable par rapport à au moins l'un des éléments (1a, 47, 87) à transmission par surface de friction voisin, sensiblement perpendiculairement par rapport aux faces de friction (12.1, 12.2, 12.3, 12.4; 52.1, 52.2, 52.3, 52.4; 92.1, 92.2, 92.3, 92.4) respectives.

10. Dispositif selon la revendication 9, **caractérisé en ce que** le au moins un élément élastique (5, 45, 85) maintient embrayé le au moins un élément (7, 8, 48, 49, 88, 89) à transmission par surface de friction, déplaçable par rapport à l'élément (1a, 47, 87) à transmission par surface de friction voisin, contre l'élément à transmission par surface de friction (1a, 47, 87) voisin.

11. Dispositif selon la revendication 9 ou 10; **caractérisé en ce que** le dispositif d'actionnement hydraulique présente un élément formant piston (9, 93), susceptible d'être sollicité par un fluide sous pression, à l'aide d'une enceinte à fluide sous pression (6, 86) limitrophe, élément formant piston qui, avec le fluide de pression, sollicite le au moins un élément à transmission par surface de friction (9, 89), déplaçable par rapport à l'élément à transmission par surface de friction (1a, 87) voisin, maintenu débrayé vis-à-vis de l'élément à transmission par surface de friction (8, 88) voisin.

12. Dispositif selon la revendication 9 ou 10, **caractérisé en ce que**, entre le au moins un élément à transmission par surface de friction (49), déplaçable par rapport à l'élément à transmission par surface de friction (47) voisin, et l'élément à transmission par surface de friction (47) voisin, est formée une enceinte à fluide sous pression (46) faisant partie du dispositif d'actionnement hydraulique, sachant que l'enceinte à fluide sous haute pression (46) est susceptible d'être sollicitée par un fluide sous pression, de manière que le au moins un élément à transmission par surface de friction (49), déplaçable par rapport à l'élément à transmission par surface de friction (47) voisin, puisse être maintenu débrayé vis-à-vis de l'élément à transmission par surface de friction (47) voisin.

13. Dispositif selon la revendication 12, **caractérisé en ce qu'**un dispositif d'étranglement (53) est prévu pour limiter une perte en fluide sous pression.

14. Dispositif selon l'une des revendications 11 à 13, **caractérisé en ce qu'**un dispositif d'étanchéité (11, 51, 91.1, 91.2, 91.3) est prévu pour fermer hermétiquement l'enceinte à fluide sous pression (6, 46, 86).

15. Tronçon d'entraînement, muni d'un dispositif selon l'une des revendications précédentes.
